# EUROPÄISCHE PATENTSCHRIFT

(11) **EP 1 163 944 B1**
(45) Veröffentlichungstag und Bekanntmachung des Hinweises auf die Patenterteilung: **06.05.2009**
(21) Anmeldenummer: 01114072.0
(22) Anmeldetag: 09.06.2001
(51) Int. Cl.: B01D 36/00, F02M 37/22

(54) **Filter mit ringförmig ausgebildetem Filtermedium**
Filter with annular formed filter medium
Filtre avec matériau filtrant de forme annulaire

(30) Priorität: 15.06.2000 DE 10029539
(43) Veröffentlichungstag der Anmeldung: 19.12.2001
(73) Patentinhaber: Mann + Hummel GmbH, 71638 Ludwigsburg (DE)
(72) Erfinder: Jokschas, Günter, 71540 Murrhardt (DE); Luka, Helmut, 71672 Marbach (DE); Reyinger, Jochen, 71336 Waiblingen (DE)
(74) Vertreter: Voth, Gerhard

(56) Entgegenhaltungen:
- EP-A- 0 715 873
- EP-A- 0 754 483
- EP-A- 0 806 564
- FR-A- 2 548 920
- US-A- 3 288 299
- US-A- 5 900 140

## Beschreibung

### Stand der Technik

Die Erfindung betrifft einen Filter, der ein ringförmig zwischen Endscheiben ausgebildetes Filtermedium in Form einer Filterpatrone enthält und mit einem weiteren Funktionsbauteil in eine Gehäusestruktur eingebaut ist, nach der Gattung des Patentanspruches 1.

Derartige Filter sind bekannt. Sie werden insbesondere zur Filterung von Flüssigkeiten, z. B. zur Filterung von Kraftstoff für eine Brennkraftmaschine verwendet. Ein solcher Filter ist z. B. in der EP 715 873 A2 offenbart. Dieser Filter hat am Gehäuseboden eine Ablassschraube für Wasser, welches im Kraftstoff enthalten ist und nach und nach im Gehäuse abgeschieden und angesammelt wird. Ein ebenfalls im Gehäuseboden untergebrachter Wassersensor ermittelt den höchst zulässigen Wasserstand im Gehäuse und signalisiert die Notwendigkeit einer Austragung des Wassers aus dem Kraftstofffilter.

Die Unterbringung von Ablassschraube und Wassersensor im Gehäuseboden des Kraftstofffilters setzt jedoch voraus, dass für diese Elemente genügender Einbauraum im Motorraum der Brennkraftmaschine zur Verfügung steht. Die Platzverhältnisse in Kraftfahrzeugen sind jedoch häufig durch weitere Bauteile stark beschränkt. Daher werden die Möglichkeiten, den Kraftstofffilter sinnvoll in der Brennkraftmaschine zu integrieren, durch die dargestellte Geometrie des Wasserablaufs und des Sensors eingeschränkt. Insbesondere muss unter der Ablassschraube genügend Platz vorgesehen werden, um ein Auffanggefäß für das abgelassene Wasser bereitzustellen.

Dokument EP 0 754 483 A1 beschreibt ein Filtermedium, das eine Aussparung besitzt, die mehrere kleine Falten aufweist.

Aufgabe der Erfindung ist es daher, einen Filter zu schaffen, der eine große Gestaltungsfreiheit hinsichtlich weiterer am Filter untergebrachter Funktionskomponenten aufweist. Diese Aufgabe wird durch die Merkmale des Patentanspruches 1 gelöst.

### Vorteile der Erfindung

Der erfindungsgemäße Filter weist in bekannter Weise eine Gehäusestruktur auf, die z. B. durch ein topfförmiges Gehäuse mit einem Einlass und einem Auslass für das zu filternde Fluid gebildet sein kann. In dieses Gehäuse ist eine Filterpatrone eingebaut, welche ein ringförmiges Filtermedium aufweist. Dieses kann z. B. aus einem Filtervlies bestehen, welches um einen Stützkörper gewickelt werden kann. Gemäß der Erfindung wird eine gefaltete Filterbahn ringförmig zusammengeschloßen, wobei im Verband mit den Endscheiben die Filterpatrone entsteht. Die zylindrische Filterpatrone muss einen kreisförmigen Querschnitt aufweisen. Ebenso denkbar sind beliebige andere Querschnitte, z. B. ein elliptischer Querschnitt.

Im Filter ist ein weiteres Funktionsbauteil vorgesehen, welches am Filter eine bestimmte Funktion übernimmt. Dieses ist in der Gehäusestruktur befestigt und weist gemäß der Erfindung in eine Aussparung im Filtermedium hinein, die zu diesem Zweck in der Filterpatrone vorgesehen ist. Hierdurch lässt sich das weitere Funktionsbauteil flexibel in der Gehäusestruktur anordnen, wodurch die Einbauverhältnisse des Filters am Einbauort besser Beachtung finden können.

Gemäß der Erfindung wird das Filtermedium durch eine ringförmig zusammengeschlossene Filterbahn gebildet, so lässt sich die Aussparung durch eine Faltentasche mit vergrößertem Faltenabstand bilden. Der vergrößerte Faltenabstand sorgt für eine parallel zur Achse des Filters verlaufende Aussparung, die keinen zusätzlichen Dichtungsaufwand am Filtermedium hervorruft, da dieses dennoch ringförmig geschlossen ist. Die Filterbahn kann aus Filterpapier oder Vlies bestehen. Denkbar sind auch mehrlagige Filtermedien, die zusätzlich Stützlagen oder Vorabscheidelagen aufweisen können.

Gemäß der Erfindung weist mindestens eine der Endscheiben eine Aussparung auf, die mit der Aussparung im Filtermedium korrespondiert. Hierdurch kann das weitere Funktionsbauteil auch von der Stirnseite der Filterpatrone her in die Aussparung geschoben werden. Die Aussparung in der Endscheibe kann z. B. durch ein Loch oder eine Einkerbung gebildet werden.

Besondere Ausgestaltungen der Erfindung sehen vor, dass das weitere Funktionsbauteil ein Fühler eines Wasserstandssensors und/oder ein Saugstutzen für einen Flüssigkeitsablass ist. Der Flüssigkeitsablass ist insbesondere zum Entfernen von abgeschiedenen Wasser aus dem Kraftstoff eines Kraftstofffilters geeignet. In diesem Zusammenhang kann der Wasserstandssensor den höchst zulässigen Wasserpegel in der Gehäusestruktur des Filters bestimmen. Da sich das aus dem Kraftstoff abgeschiedene Wasser im unteren Teil des Gehäuses ansammelt, sind für die Unterbringung des Wasserstandssensors und des Flüssigkeitsablasses entsprechende Anforderungen an die Einbaulage zu stellen. Daher ist der geometrische Spielraum für die Anbringung dieser Bauteile ohnehin begrenzt. Daher wirkt sich die Aussparung in der Filterpatrone bei diesen Bauteilen besonders vorteilhaft aus, da die Problematik der beschränkten Anbringungsmöglichkeiten ausgeglichen wird.

Ein Kraftstofffilter für die Filterpatrone mit der Aussparung weist vorteilhafterweise einen Gehäusetopf und einen Gehäusedeckel auf, wobei das weitere Funktionselement in Deckel befestigt ist. Die Befestigung im Deckel wird bei hängender Anordnung des Kraftstofffilters mit Gehäusetopf nach unten nur möglich, wenn die Patrone eine Aussparung aufweist. Andernfalls könnte ein Wasserstandssensor bzw. ein Saugstutzen nicht an der Patrone vorbeigeführt werden, da hierzu kein Platz im Gehäusetopf vorgesehen ist. Die Anordnung der genannten Funktionsbauteile im Deckel ist aber nicht nur wegen der günstigeren Einbauplatzverhältnisse zu bevorzugen, sondern auch, weil alle komplexen Aufnahmestrukturen für Einlass, Auslass und die Funktionsbauteile in den Deckel integriert werden können. Der Gehäusetopf wird damit ein geometrisch einfaches und leicht zu fertigendes Bauteil, wodurch die Lösung wirtschaftlicher wird.

Eine Filterpatrone, die die erfindungsgemäßen Merkmale aufweist, wird ebenfalls unter Schutz gestellt. Diese ist wie beschrieben in den erfindungsgemäßen Filter einzubauen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in den Zeichnungen anhand eines Ausführungsbeispiels beschrieben. Hierbei zeigen
- Figur 1: einen Mittelschnitt durch einen Kraftstofffilter,
- Figur 2: die Aufsicht A auf einen Kraftstofffilter ohne Deckel gemäß Figur 1 und
- Figur 3: die Aufsicht auf den montierten Kraftstofffilter gemäß Figur 1 aus Richtung A.

### Beschreibung des Ausführungsbeispiels

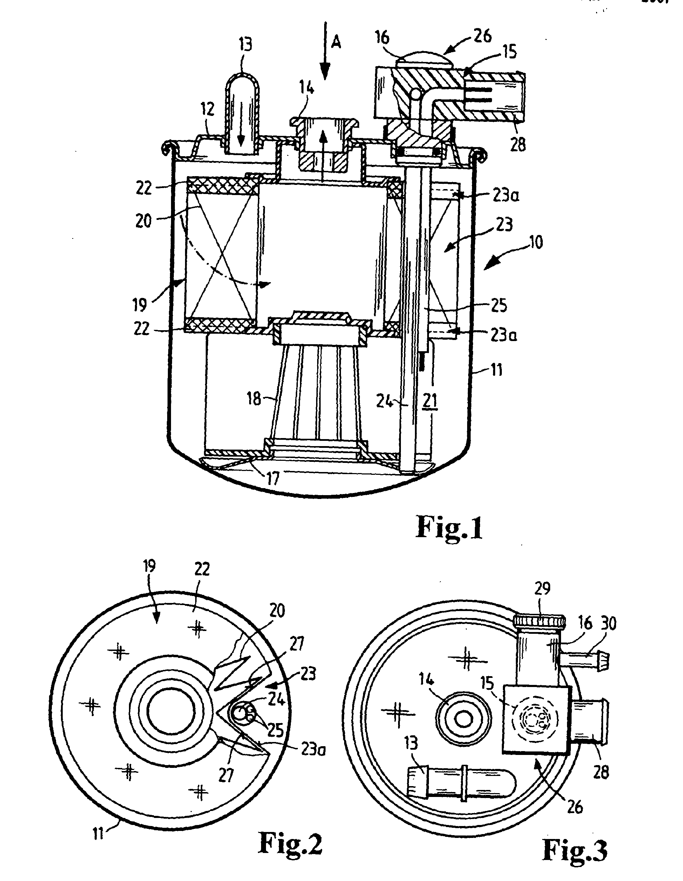

Der Kraftstofffilter gemäß Figur 1 weist eine Gehäusestruktur 10 mit einem Gehäusetopf 11 und einem Gehäusedeckel 12 auf. Im Gehäusedeckel 12 sind ein Einlass 13 und ein Auslass 14 für den Kraftstoff sowie ein Wasserstandssensor 15 und ein Flüssigkeitsablass 16 für das aus der Gehäusestruktur abzuscheidende Wasser untergebracht.

In den Gehäusetopf 11 ist mit Hilfe einer Tellerfeder 17 und einem Abstandhalter 18 eine Filterpatrone 19 derart eingebaut, dass die Filterpatrone den Einlass 13 dichtend von dem Auslass 14 trennt. Daher muss der Kraftstoff durch ein Filtermedium 20 strömen, was durch Pfeile angedeutet ist. Durch den Abstandhalter ist im unteren Teil des Gehäusetopfes ein Auffangraum 21 für das abgeschiedene Wasser gebildet.

Die Filterpatrone 19 besteht aus dem ringförmigen Filtermedium 20, welches durch ein zick-zack-förmig gefaltetes Filterpapier gebildet ist, und aus Endscheiben 22, in die die Stirnseiten des Filtermediums eingebettet sind. Dargestellt ist weiterhin eine Aussparung 23 im Filtermedium sowie Aussparungen 23a in den Endscheiben 22, durch die ein Saugstutzen 24 des Flüssigkeitsablasses 16 und ein Fühler 25 des Wasserstandssensors 15 geführt sind. Diese erstrecken sich vom Montageort im Gehäusedeckel 12 bis hinein in den Auffangraum 21 für das Wasser, der infolge der Einbaulage des Kraftstofffilters mit nach unten weisendem Gehäusetopf 11 unterhalb der Filterpatrone liegt. Wasserstandssensor 15 und Flüssigkeitsablass 16 sind in einem Montagekopf 26 zusammengefasst.

Figur 2 gestattet den Blick auf die Filterpatrone 19, wobei die obere Endscheibe 22 teilweise aufgebrochen dargestellt ist. Darunter wird das gefaltete Filtermedium 20 sichtbar, wobei die Aussparung 23 durch eine Faltentasche 27 gebildet wird, die einen größeren Faltenabstand als die anderen Faltentaschen hat. Die Aussparung 23 des Filtermediums korrespondiert mit den Aussparungen 23a in den Endscheiben 22, wobei die Aussparung der unteren Endscheibe 23a zu erkennen ist. In der Aussparung ist weiterhin der Schnitt durch den Fühler 25 und den Saugstutzen 24 zu erkennen. Angedeutet als Einbauort ist der Gehäusetopf 11.

Figur 3 zeigt die Aufsicht auf den Kraftstofffilter, wobei der Einlass 13 versetzt dargestellt ist. Zu erkennen ist weiterhin der Auslass 14 und der Montagekopf 26. Dieser besteht aus dem Wasserstandssensor 15, welcher einen Steckanschluss 28 für nicht dargestellte Signalleitungen aufweist, und dem Flüssigkeitsablass 16, welcher eine handbetätigte Ventilschraube 29 und einen Schlauchstutzen 30 aufweist.

## Patentansprüche

1. Filter mit einer ein ringförmig zwischen Endscheiben (22) ausgebildetes Filtermedium (20) enthaltenden Filterpatrone, insbesondere Flüssigkeitsfilter für ein Kraftfahrzeug, wobei das Filtermedium (20) aus einer gefalteten, ringförmig zusammen geschlossenen Filterbahn besteht, wobei der Filter eine Gehäusestruktur (10) mit einem Einlass (14) und einem Auslass (14) für das zu reinigende Fluid und ein weiteres Funktionsbauteil aufweist, wobei für das weitere Funktionsbauteil mindestens eine Aussparung (23) im Filtermedium vorgesehen ist, **dadurch gekennzeichnet, dass** sich die Aussparung (23) axial zumindest bis zu einer der Endscheiben (22) erstreckt, und diese Endscheibe ebenfalls eine Aussparung (23a) aufweist, die mit der Aussparung (23) im Filtermedium korrespondiert und wobei die Aussparung (23) durch eine einzige Faltentasche (27) gebildet ist, die einen größeren Faltenabstand als die anderen Faltentaschen hat.

2. Filter nach einem der vorherigen Ansprüche, **dadurch gekennzeichnet, dass** das weitere Funktionsbauteil ein Fühler (25) eines Wasserstandssensors (15) ist.

3. Filter nach einem der vorherigen Ansprüche, **dadurch gekennzeichnet, dass** das weitere Funktionsbauteil ein Saugstutzen (24) eines Flüssigkeitsablasses (16) ist.

4. Filter nach einem der vorherigen Ansprüche, **dadurch gekennzeichnet, dass** dieser als Kraftstofffilter mit einer Gehäusestruktur, bestehend aus einem Gehäusetopf (11) und einem Gehäusedeckel (12), ausgeführt ist, wobei das weitere Funktionselement im Deckel befestigt ist und in die Aussparung (23) des Filtermediums hineinragt.

## Claims

1. Filter with a filter cartridge comprising a ring-shaped filter medium (20) formed between end plates (22), in particular liquid filter for a motor vehicle, the filter medium (20) consisting of a pleated filter belt closed in a ring-shaped design, the filter featuring a housing structure (10) with an intake (14) and an outlet (14) for the fluid to be cleaned as well as another functional component, at least one cut-out (23) in the filter medium being provided for the other functional component, **characterized in that** the cut-out (23) extends axially at least until one of the end plates (22) and that this end plates features also a cut-out (23a) which corresponds with the cut-out (23) in the filter medium, and the cut-out (23) being formed by only one fold pocket (27) which has a larger pleat distance than the other fold pockets.

2. Filter according to one of the above claims, **characterized in that** the other functional component is a sensor (25) of a water level detector (15).

3. Filter according to one of the above claims, **characterized in that** the other functional component is an intake tube (24) of a fluid outlet (16).

4. Filter according to one of the above claims, **characterized in that** it is designed as fuel filter with a housing structure, consisting of a housing pot (11) and a housing cover (12), the other functional component being attached in the cover and protruding into the cut-out (23) of the filter medium.

## Revendications

1. Filtre avec une cartouche filtrante contenant un milieu filtrant (20) réalisé de façon annulaire entre des plaques d'extrémité (22), en particulier filtre à liquide pour un véhicule automobile (1), le milieu filtrant (20) étant constitué d'une bande filtrante pliée, fermée de façon annulaire, le filtre présentant une structure de boîtier (10) avec une entrée (14) et une sortie (14) pour le fluide à nettoyer et un autre composant fonctionnel, au moins un évidement (23) étant prévu dans le milieu filtrant pour l'autre composant fonctionnel, **caractérisé en ce que** l'évidement (23) s'étend en sens axial au moins jusqu'à une des plaques d'extrémité (22) et que cette plaque d'extrémité présente également un évidement (23a) qui correspond avec l'évidement (23) dans le milieu filtrant et l'évidement (23) étant réalisé par une seule poche à plis (27) qui présente une distance entre les plis plus grande que les autres poches à plis.

2. Filtre selon l'une des revendications précédentes, **caractérisé en ce que** l'autre composant fonctionnel est une sonde (25) d'un capteur de niveau d'eau (15).

3. Filtre selon l'une des revendications précédentes, **caractérisé en ce que** l'autre composant fonctionnel est une tubulure d'aspiration (24) d'un écoulement de liquide (16).

4. Filtre selon l'une des revendications précédentes, **caractérisé en ce que** ce filtre est réalisé comme filtre à carburant avec une structure de boîtier, composé d'un pot de boîtier (11) et d'un couvercle de boîtier (12), l'autre élément fonctionnel étant fixé dans le couvercle et entrant dans l'évidement (23) du milieu filtrant.
